# EUROPÄISCHE PATENTSCHRIFT

(11) **EP 1 111 391 B1**
(45) Veröffentlichungstag und Bekanntmachung des Hinweises auf die Patenterteilung: **26.07.2006**
(21) Anmeldenummer: 99811180.1
(22) Anmeldetag: 21.12.1999
(51) Int. Cl.: G01N 35/04, B01L 9/00

(54) **Klemmvorrichtung zur Aufnahme und genauer Positionierung eines Gegenstandes, vorzüglich einer Mikrotiterplatte, sowie Verfahren zu ihrem Betrieb**
Clamping device for holding and aligning an item such as a microtitration plate, and method for its use
Dispositif de serrage d'un objet tel qu'une plaque de microtitration, et méthode d'utilisation du dispositif

(43) Veröffentlichungstag der Anmeldung: 27.06.2001
(73) Patentinhaber: Tecan Trading AG, 8708 Männedorf (CH)
(72) Erfinder: Steiner, Edwin, 8849 Alpthal (CH)
(74) Vertreter: OK pat AG

(56) Entgegenhaltungen:
- WO-A-99/04228
- US-A- 5 168 766
- US-A- 5 592 289
- US-A- 5 620 894

## Beschreibung

### Technisches Gebiet

Die Erfindung betrifft eine Vorrichtung zur Aufnahme eines Gegenstandes, insbesondere einer Mikrotiterplatte, eine Einrichtung zum Transport und zur Aufnahme eines derartigen Gegenstandes sowie ein Verfahren zu ihrem Betrieb und ist vor allem im Bereich von Laboreinrichtungen für chemische, biologische und medizinische Untersuchungen einsetzbar.

### Stand der Technik

Es ist bekannt, Mikrotiterplatten u. dgl. auf Ablageflächen abzulegen und dann zu bearbeiten, z.B. mittels einer automatischen Pipettiereinrichtung Proben in die einzelnen Kavitäten abzugeben oder ihnen solche zu entnehmen. Dazu muss die Mikrotiterplatte sehr genau positioniert werden. Dies erfordert, wenn die Mikrotiterplatte z.B. durch einen Greifer auf der Ablagefläche abgesetzt wird, eine sehr genaue Steuerung desselben. Ausserdem besteht die Gefahr nachträglicher Verschiebung durch mechanische Einwirkung.

Aus US 5,592,289 ist eine verschiebbare Lade mit einem selbstzentrierenden Mechanismus zur Aufnahme einer Probenträgerplatte bekannt. Eine aus dem Stand der Technik vorbekannte Ausführungsform umfasst zwei Druckfedern, welche eine eingesetzte Probenträgerplatte an die jeweils gegenüber liegenden Anschlagränder drücken und so fixieren. Diese Ausführungsform wird dahin gehend verbessert, dass eine Probenträgerplatte manuell oder automatisiert eingesetzt werden kann, ohne dass der Widerstand von Federelemente überwunden werden müsste. Dies wird dadurch erreicht, dass die Probenträgerplatte bei ausgezogener Lade auf eine horizontal verschiebliche Plattform gelegt wird. Beim Zurückziehen der Lade wird die Probenträgerplatte mit der Plattform gegen Anschlagstifte bewegt und zwischen diesen und einem zusätzlichen Federelement geklemmt gehalten.

### Darstellung der Erfindung

Der Erfindung liegt die Aufgabe zu Grunde, eine alternative Vorrichtung anzugeben, die einen Gegenstand wie eine Mikrotiterplatte derart aufnimmt, dass er genau positioniert und in seiner Lage festgehalten ist. Diese Aufgabe wird durch die Merkmale des Anspruchs 1 gelöst.

Die durch die Erfindung erreichten Vorteile liegen vor allem darin, dass der Gegenstand mit mässigem Steuerungsaufwand in eine genau definierte Position gebracht und dort festgehalten werden kann. In dieser kann er Arbeitsschritten unterworfen werden, für deren erfolgreiche Durchführung eine genaue Positionierung Voraussetzung ist.

Besonders günstig ist die Verbindung einer erfindungsgemässen Vorrichtung mit einem Greifer, welcher geeignet ist, den Gegenstand zu transportieren und abzusetzen und zugleich die Vorrichtung zu steuern, zu einer erfindungsgemässen Einrichtung zum Transport und zur Aufnahme eines Gegenstandes gemäss Anspruch 7. Eine derartige Einrichtung erlaubt einen Ablauf gemäss dem erfindungsgemässen Verfahren nach Anspruch 8, bei dem die Positionierung des Gegenstandes zugleich mit dem Absetzen desselben ausgelöst wird, ohne dass zusätzliche Massnahmen und weiterer Steuerungsaufwand erforderlich wären.

### Kurze Beschreibung der Zeichnungen

Im folgenden wird die Erfindung anhand von Figuren, welche lediglich ein Ausführungsbeispiel darstellen, näher erläutert. Es zeigen
- Fig. 1: eine Draufsicht auf eine erfindungsgemässe Vorrichtung,
- Fig. 2: vergrössert eine Seitenansicht einer Klemmvorrichtung der erfindungsgemässen Vorrichtung,
- Fig. 3: vergrössert eine Draufsicht auf einen Ausschnitt III in Fig. 1, wobei ein Teil der Klemmvorrichtung entfernt ist,
- Fig. 4a: eine Seitenansicht einer erfindungsgemässen Einrichtung während einer ersten Phase des erfindungsgemässen Verfahrens,
- Fig. 4b: eine Draufsicht auf die Einrichtung gemäss Fig. 4a,
- Fig. 5a: eine Seitenansicht einer erfindungsgemässen Einrichtung während einer zweiten Phase des erfindungsgemässen Verfahrens,
- Fig. 5b: eine Draufsicht auf die Einrichtung gemäss Fig. 5a,
- Fig. 6a: eine Seitenansicht einer erfindungsgemässen Einrichtung während einer dritten Phase des erfindungsgemässen Verfahrens,
- Fig. 6b: eine Draufsicht auf die Einrichtung gemäss Fig. 6a,
- Fig. 7a: eine Seitenansicht einer erfindungsgemässen Einrichtung während einer vierten Phase des erfindungsgemässen Verfahrens und
- Fig. 7b: eine Draufsicht auf die Einrichtung gemäss Fig. 7a.

### Wege zur Ausführung der Erfindung

Auf z. B. einem Laborgerät ist eine waagrechte Grundplatte 1 angeordnet, mit der eine ebene Positionsplatte 2 verschraubt ist, welche eine ebene, im wesentlichen rechteckige Ablagefläche 3 bildet. Die letztere ist von z. T. mittig unterbrochenen aufragenden Stegen 4a,b,c,d berandet, von denen die Stege 4b,c einen Anschlag bilden, welcher Verschiebung eines auf der Ablagefläche 3 abgelegten Gegenstandes insbesondere rechteckigen Umrisses nach zwei aufeinander senkrechten Richtungen jeweils einseitig, d. h. gegen aussen beschränkt.

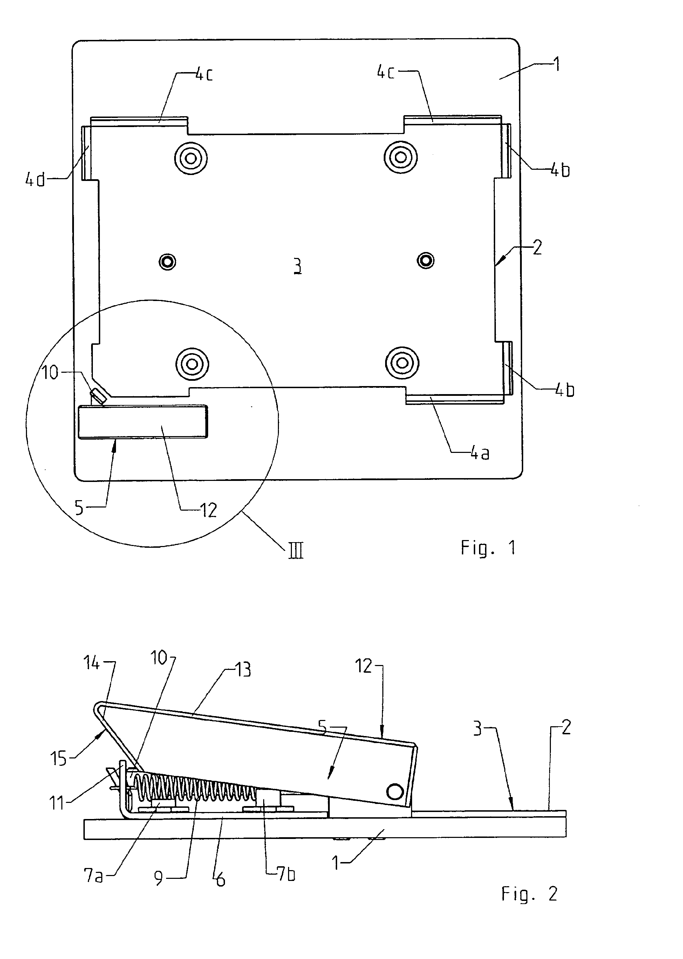

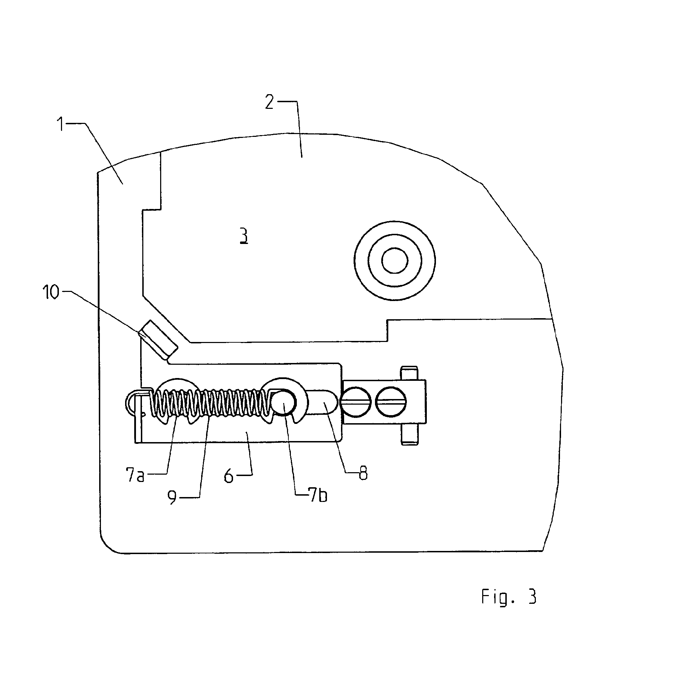

Etwas ausserhalb jener Ecke der Ablagefläche 3, welche der von den Stegen 4b,c eingefassten gegenüberliegt, ist eine Klemmvorrichtung 5 angeordnet. Sie umfasst (Fig. 2, 3) einen plattenförmigen Schieber 6, der an zwei Bolzen 7a,b, die durch ein mittiges Langloch 8 ragen, so geführt ist, dass er parallel zum Steg 4c und senkrecht zum Steg 4b längsverschieblich ist. Durch eine auf Zug beanspruchte Spiralfeder 9, die am hinteren Bolzen 7b verankert ist, wird der Schieber 6 in einer Grundstellung festgehalten, in der das Ende des Langlochs 8 am vorderen Bolzen 7a ansteht. Die Spiralfeder 9 hält den Schieber 6 auch in der Grundstellung unter einer Vorspannung, so dass er aus derselben nur durch Krafteinwirkung zurückziehbar ist. Der Schieber 6 trägt am einen Ende eine gegen die Ablagefläche 3 hin seitlich versetzte senkrecht nach oben gerichtete Klemmplatte 10, die eine schräge, gegen die von den Stegen 4b,c eingefasste Ecke weisende Klemmfläche bildet. Sie ist dadurch geeignet, auf den festzuhaltenden Gegenstand eine Kraft auszuüben, die denselben gegen beide als Anschläge wirkende Stege 4b,c drückt, obwohl die von der Spiralfeder 9 auf den Schieber 6 ausgeübte Kraft gerade gegen den Steg 4b gerichtet und zum Steg 4c parallel ist.

Des weiteren weist der Schieber 6 am gleichen Ende einen in der Fortsetzung des Langlochs 8 angeordneten nach oben abstehenden Gleitfortsatz 11 auf. Er wirkt mit einem Hebel 12 zusammen, der etwas ausserhalb des entgegengesetzten Endes des Schiebers 6 um eine mit der Grundplatte 1 verbundene waagrechte Achse schwenkbar gelagert ist. Der Hebel 12 weist eine etwa waagrechte Deckplatte 13 auf sowie eine nach unten abgebogene, mit der Deckplatte 13 einen spitzen Winkel einschliessende Druckplatte 14, deren Unterseite eine Druckfläche 15 bildet, welche auf den Gleitfortsatz 11 einwirkt.

Wird nun der Hebel 12 durch eine auf die Deckplatte 13 einwirkende nach unten gerichtete Kraft gedreht, so wirkt die Druckfläche 15 derart auf den Gleitfortsatz 11 ein, dass der Schieber 6 verschoben und einschliesslich der Klemmplatte 10 unter Dehnung der Spiralfeder 9 aus der Grundstellung zurückgezogen wird. Hört die Einwirkung der Kraft auf, wird der Schieber 6 mit der Klemmplatte 10 durch die Spiralfeder 9 wieder in die Grundstellung verschoben, während der Hebel 12 durch Einwirkung des Gleitfortsatzes 11 auf die Druckfläche 15 angehoben wird. Statt des Gleitfortsatzes 11 kann auch ein anders ausgebildetes Kontaktteil, z. B. eine Rolle vorgesehen sein.

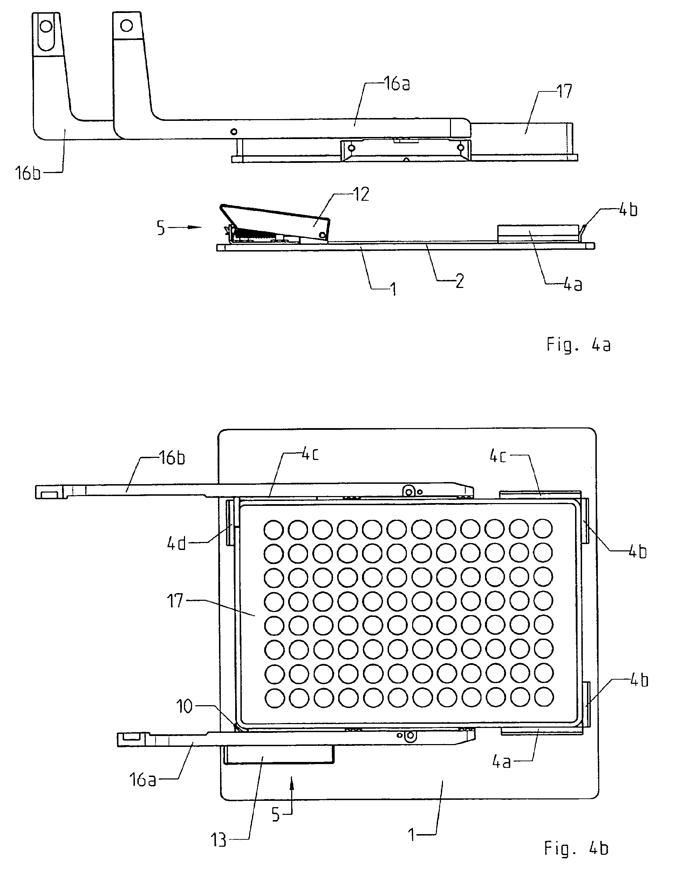

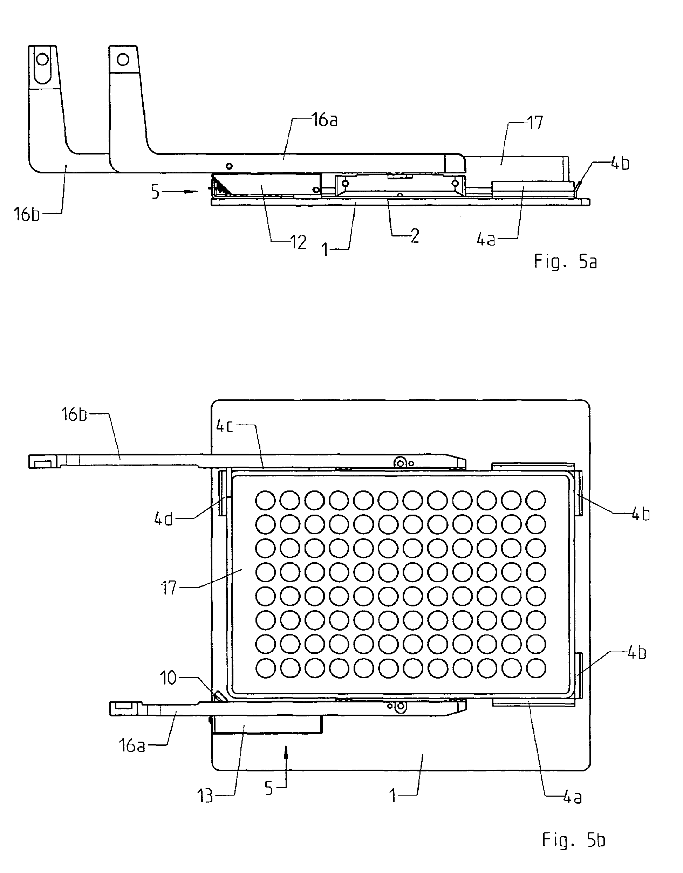

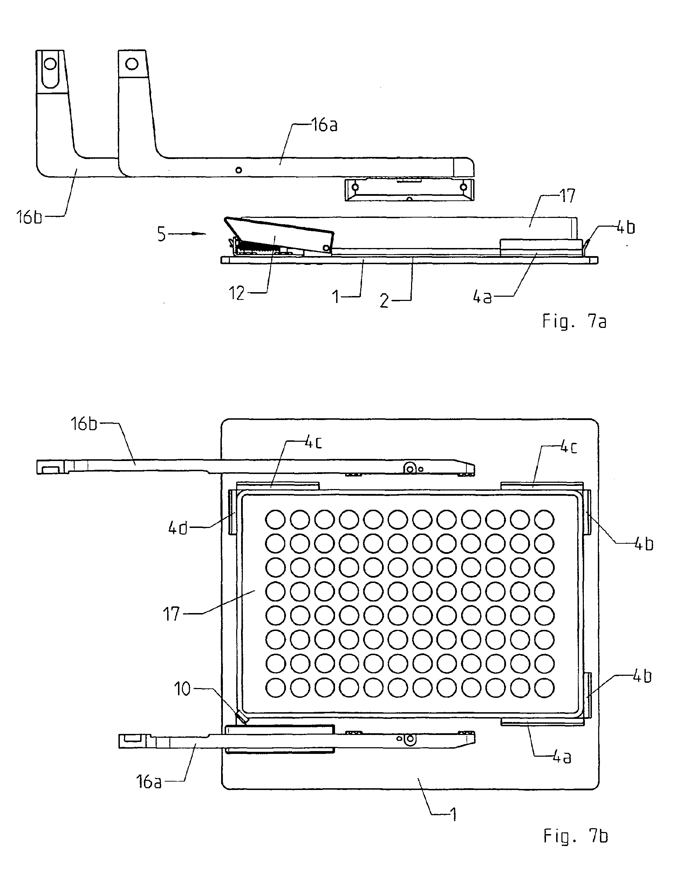

Die erfindungsgemässe Einrichtung weist (Fig. 4a,b - 7a,b) zusätzlich einen Greifer mit zwei parallelen Armen 16a,b auf, welche zusammen heb- und senkbar und parallel zur Ebene der Ablagefläche 3 bewegbar sowie aufeinander zu- und voneinander wegbewegbar sind. Die Greiferarme 16a,b halten etwa eine Mikrotiterplatte 17 zwischen sich gefasst und transportieren sie in eine Lage oberhalb der Ablagefläche 3 (Fig. 4a,b). Anschliessend werden die Greiferarme 16a,b mit der Mikrotiterplatte 17 abgesenkt und die letztere auf die Ablagefläche 3 aufgesetzt (Fig. 5a,b) . Während des letzten Teils dieser Bewegung drückt der rechte Greiferarm 16a auf die Deckplatte 13, was in schon beschriebener Weise ein Zurückziehen der Klemmplatte 10 aus der Grundstellung bewirkt, so dass sie aus dem Weg ist und das Aufsetzen der Mikrotiterplatte 17 nicht behindert.

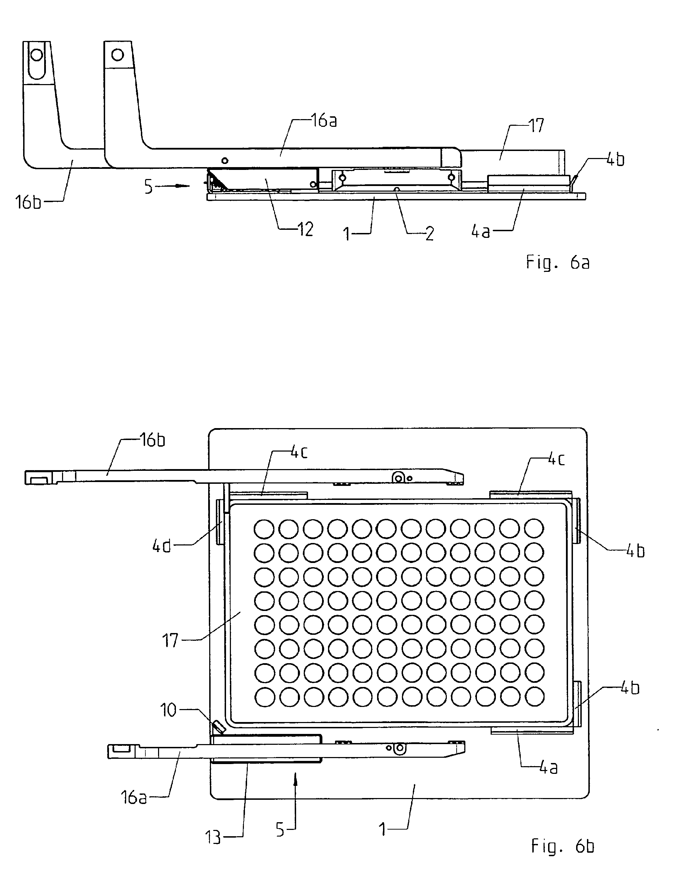

Anschliessend werden die Greiferarme 16a,b seitwärts nach aussen bewegt und so von der Mikrotiterplatte 17 gelöst (Fig. 6a,b) . Schliesslich werden sie angehoben, wodurch sich die Klemmplatte 10 in ebenfalls bereits beschriebener Weise gegen die Grundstellung bewegt, bis sie an der Mikrotiterplatte 17 anstösst und dieselbe erforderlichenfalls gegen die als Anschläge wirkenden Stege 4b,c schiebt und andrückt. Die Mikrotiterplatte 17 ist dann in eine durch die Stege 4b,c genau definierte Lage gebracht und zwischen denselben und der Klemmplatte 10 festgeklemmt. Es kann nun ein Arbeitsgang ausgeführt werden, der eine genau kontrollierte Lage der Mikrotiterplatte 17 erfordert wie z. B. die Aufnahme von Proben aus den Kavitäten derselben oder die Abgabe von Proben in dieselben mittels eines automatisch gesteuerten Pipettiergeräts.

Besonders günstig ist es, dass die Klemmvorrichtung nicht separat gesteuert werden muss, sondern von den Greiferarmen 16a,b gewissermassen nebenbei betätigt wird. Sie stellt ein rein passives mechanisches Element dar und kann daher sehr einfach aufgebaut und entsprechend billig sein.

### Bezugszeichenliste

- 1: Grundplatte
- 2: Positionsplatte
- 3: Ablagefläche
- 4a,b,c,d: Stege
- 5: Klemmvorrichtung
- 6: Schieber
- 7a,b: Bolzen
- 8: Langloch
- 9: Spiralfeder
- 10: Klemmplatte
- 11: Gleitfortsatz
- 12: Hebel
- 13: Deckplatte
- 14: Druckplatte
- 15: Druckfläche
- 16a,b: Greiferarme
- 17: Mikrotiterplatte

## Patentansprüche

1. Vorrichtung zur Aufnahme eines Gegenstandes, insbesondere einer Mikrotiterplatte (17), umfassend:
a) eine Grundplatte (1) mit einer einen Anschlag aufweisenden Ablagefläche (3), wobei der Anschlag am Rand der Ablagefläche (3) angeordnet ist und eine Verschiebung des auf dieser Ablagefläche (3) positionierten Gegenstandes einseitig beschränkt; und
b) eine auf dieser Grundplatte montierte Klemmvorrichtung (5) mit:
• einem Schieber (6), der in seiner Grundstellung gegen eine Vorspannung dem Anschlag gegenüber zurückziehbar am Rand der Ablagefläche (3) angeordnet ist; und mit
• einer am Schieber (6) angeordneten, gegen den Anschlag weisenden Klemmplatte (10), die eine Kraft auf den Gegenstand ausübt;
**dadurch gekennzeichnet, dass** die Klemmvorrichtung einen Hebel (12) umfasst, der mit einem ersten Ende mittels einer parallel zur Ablagefläche (3) und zum Anschlag angeordneten Achse an der Grundplatte (1) drehbar befestigt ist, wobei der Hebel (12) an seinem zweiten Ende eine nach unten weisende, schräge Druckfläche (15) umfasst, die mit einem nach oben stehenden Gleitfortsatz (11) des Schiebers (6) derart in Wirkverbindung steht, dass - durch ein Niederdrücken des zweiten Endes des Hebels (12) und damit ein Drehen desselben um seine Achse - die schräge Druckfläche (15) auf dem nach oben stehenden Gleitfortsatz (11) gleitet und der Schieber und die Klemmplatte (10) gegenüber dem Anschlag und parallel zur Ablagefläche (3) gleitend wegbewegt werden, wodurch der Gegenstand freigegeben wird.

2. Vorrichtung nach Anspruch 1, **dadurch gekennzeichnet, dass** der Anschlag zwei am Rand der Ablagefläche (3) angeordnete, rechtwinklig zueinander ausgerichtete Stege (4b, 4c) umfasst, wodurch der Anschlag zur vollständigen Festlegung der Position des Gegenstandes eine Verschiebung desselben nach zwei Richtungen einseitig beschränkt.

3. Vorrichtung nach Anspruch 2, **dadurch gekennzeichnet, dass** die Klemmplatte (10) mit beiden Stegen (4b, 4c) jeweils einen spitzen Winkel einschliesst.

4. Vorrichtung nach Anspruch 2 oder 3, **dadurch gekennzeichnet, dass** die Klemmplatte (10) mit beiden Stegen (4b, 4c) jeweils einen Winkel von je 45° einschliesst.

5. Vorrichtung nach einem der Ansprüche 2 bis 4, **dadurch gekennzeichnet, dass** der Schieber (6) am Rand der Ablagefläche (3) parallel zu einem der Stege (4b, 4c) zurückziehbar angeordnet ist.

6. Vorrichtung nach einem der vorhergehenden Ansprüche, **dadurch gekennzeichnet, dass** der auf der Ablagefläche (3) aufgenommene Gegenstand eine Mikrotiterplatte (17) ist.

7. Einrichtung zum Transport und zur Aufnahme eines Gegenstandes, insbesondere einer Mikrotiterplatte (17) mit einer Vorrichtung nach einem der Ansprüche 1 bis 6, **dadurch gekennzeichnet, dass** sie einen Greifer umfasst mit mindestens einem Greiferarm (16a, 16b) zum Fassen des Gegenstandes und zum Ablegen desselben auf der Ablagefläche (3) unter gleichzeitiger Betätigung des Hebels (12).

8. Verfahren zum Betrieb einer Einrichtung nach Anspruch 7, **dadurch gekennzeichnet, dass** der Gegenstand durch den Greifer über die Ablagefläche (3) verbracht und dann auf dieselbe abgesenkt wird, wobei vor Erreichen der Ablagefläche (3) durch den Gegenstand durch den mindestens einen Greiferarm (16a, 16b) der Hebel (12) niedergedrückt und das Klemmteil zurückgezogen wird, dass der mindestens eine Greiferarm (16a, 16b) vom Gegenstand gelöst wird, und dass der mindestens eine Greiferarm (16a, 16b) angehoben und der Hebel (12) entlastet wird, so dass die Klemmplatte (10) vorgeschoben wird, bis der Gegenstand zwischen derselben und dem Anschlag geklemmt ist.

## Claims

1. Device for the reception of an object, especially a microtiter plate (17), comprising:
a) a base plate (1) with a reception surface (3) displaying a stop, the stop being arranged at the edge of the reception surface (3) and limiting the travel in one direction of an object positioned on this reception surface (3); and
b) a clamping device (5) mounted on this base plate with:
• a pusher (6) which in its starting position is arranged at the edge of the reception surface (3) so that it can be pulled backwards with respect to the stop against a pre-tensioned spring; and with
• a clamping plate (10) arranged on the pusher (6) facing the stop, which exerts a force on the object;
**characterized in that** the clamping device comprises a lever (12) which is fastened at one end able to turn about a pivot on the base plate (1), the pivot being situated parallel to the reception surface (3) and to the stop, the lever (12) comprising at its other end a diagonal, downward facing pressure surface (15), which operates in conjunction with an upward protruding slide extension (11) of the pusher (6) in such a way that, by depression of the second end of the lever (12) and its consequent rotation on its pivot, the diagonal pressure surface (15) slides on the upward protruding slide extension (11) and the pusher and the clamping plate (10) are slid away from the stop and parallel to the reception surface (3), so that the object is released.

2. Device according to Claim 1, **characterized in that** the stop comprises two raised rims (4b,4c) arranged at right angles to each other at the edge of the reception surface (3), so that the stop limits any translation of the object laterally in two directions in order to fix its position.

3. Device according to Claim 2, **characterized in that** the clamping plate (10) includes an acute angle with each of the rims (4b,4c).

4. Device according to Claim 2 or 3, **characterized in that** the clamping plate (10) includes an angle of 45° with each of the rims (4b,4c).

5. Device according to any one of Claims 2 to 4, **characterized in that** the pusher (6) at the edge of the reception surface (3) is arranged so that it can be pulled back parallel to one of the rims (4b,4c).

6. Device according to any one of the above Claims, **characterized in that** the object received on the reception surface (3) is a microtiter plate (17).

7. Apparatus for the transport and reception of an object, especially a microtiter plate (17), with a device according to any one of Claims 1 to 6, **characterized in that** it comprises a gripper with at least one gripper arm (16a, 16b) to grip the object and set it down on the reception surface (3) while simultaneously actuating the lever (12).

8. Procedure for operation of an apparatus according to Claim 7, **characterized in that** the object is brought by the gripper to a position over the reception surface (3) and then lowered down on to the latter, when before the object reaches the reception surface (3), the lever (12) is depressed by the at least one gripper arm (16a,16b) and the clamping plate (10) is pulled back, that the at least one gripper arm (16a,16b) is released from the object and that the at least one gripper arm (16a,16b) is raised and the pressure taken off the lever (12), so that the clamping plate (10) is pushed forward until the object is clamped between the clamping plate (10) and the stop.

## Revendications

1. Dispositif de réception d'un objet, en particulier d'une plaque de microtitration (17), comportant :
a) une plaque de base (1) comportant une surface de placement (3) qui présente une butée, la butée étant disposée au niveau du bord de la surface de placement (3) et limitant d'un seul côté un déplacement de l'objet positionné sur cette surface de placement (3) ; et
b) un dispositif de serrage (5) monté sur cette plaque de base avec :
- un coulisseau (6), qui est disposé dans sa position de base sous une précontrainte au niveau du bord de la surface de placement (3) de façon rétractable par rapport à la butée ; et avec
- une plaque de serrage (10), disposée au niveau du coulisseau (6), et orientée contre la butée, qui exerce une force sur l'objet ;
**caractérisé en ce que** le dispositif de serrage comprend un levier (12) qui est fixé au niveau de la plaque de base (1) par une première extrémité de façon à pouvoir pivoter au moyen d'un axe disposé parallèlement à la surface de placement (3) et à la butée, le levier (12) comportant au niveau de sa seconde extrémité une surface de compression (15) oblique, orientée vers le bas, qui coopère avec un prolongement glissant (11) orienté vers le haut du coulisseau (6) de façon telle que - par un abaissement de la seconde extrémité du levier (12) et par conséquent un pivotement de celui-ci autour de son axe - la surface de compression oblique (15) glisse sur le prolongement glissant orienté (11) vers le haut et éloigne par glissement le coulisseau et la plaque de serrage (10) par rapport à la butée et parallèlement à la surface de placement (3), l'objet étant alors libéré.

2. Dispositif selon la revendication 1, **caractérisé en ce que** la butée comporte deux tiges (4b,4c) disposées au niveau du bord de la surface de placement (3), et orientées perpendiculairement l'une à l'autre, la butée, pour déterminer totalement la position de l'objet, limitant à un seul côté un déplacement de celui-ci selon deux directions.

3. Dispositif selon la revendication 2, **caractérisé en ce que** la plaque de serrage (10) avec les deux tiges (4b,4c) forme respectivement un angle aigu.

4. Dispositif selon la revendication 2 ou 3, **caractérisé en ce que** la plaque de serrage (10) avec les deux tiges (4b,4c) forme respectivement un angle de 45°.

5. Dispositif selon l'une des revendications 2 à 4, **caractérisé en ce que** le coulisseau (6) est disposé au niveau du bord de la surface de placement (3) de façon à pouvoir se rétracter parallèlement à une des tiges (4b,4c).

6. Dispositif selon l'une des revendications précédentes, **caractérisé en ce que** l'objet logé sur la surface de placement (3) est une plaque de microtitration (17).

7. Dispositif de transport et de réception d'un objet, en particulier d'une plaque de microtitration (17), comportant un dispositif selon l'une des revendications 1 à 6, **caractérisé en ce qu'**il comprend une pince présentant au moins un bras de pince (16a,16b) destiné à saisir l'objet et à déposer celui-ci sur la surface de placement (3) lors d'un actionnement simultané du levier (12).

8. Procédé d'exploitation d'un dispositif selon la revendication 7, **caractérisé en ce que** l'objet est passé par la pince au-dessus de la surface de placement (3) puis est abaissé sur celle-ci, où, avant d'atteindre la surface de placement (3) par l'objet, le levier (12) est abaissé par le bras de pince (16a,16b), au moins au nombre de un, et l'élément de serrage est rétracté, **en ce que** le bras de pince (16a,16b), au moins au nombre de un, est libéré de l'objet et **en ce que** le bras de pince (16a,16b), au moins au nombre de un, est relevé et le levier (12) déchargé, si bien que la plaque de serrage (10) est poussée jusqu'à ce que l'objet soit serré entre celle-ci et la butée.
